# EUROPEAN PATENT APPLICATION

(11) **EP 3 236 256 A1**
(43) Date of publication of application: **25.10.2017**
(21) Application number: 14908379.2
(22) Date of filing: 15.12.2014
(51) Int. Cl.: G01N 30/08, G01N 30/26

(54) **LIQUID CHROMATOGRAPH**

(71) Applicant: Shimadzu Corporation, Kyoto 604-8511 (JP)
(72) Inventor: OGURA, Tairo, Kyoto 604-8511 (JP); Levi, Mikaël, 77184 Noisiel (FR)
(74) Representative: Webster, Jeremy Mark
(86) International application number: PCT/JP2014/083178
(87) International publication number: WO 2016/098169

(57) **Abstract**

A liquid chromatograph includes: a concentration column 32 for capturing a target component in a liquid sample; an analysis column 42 for separating the target component from other components; first passage-switching units 1, 4, and 6 for switching between the state of forming a passage through which a sample-introduction mobile phase containing the liquid sample is fed to the concentration column 32, and the state of forming a passage through which an eluant for eluting the target component captured in the concentration column 32 is fed to the concentration column 32; a first storage unit 14 for storing the eluant containing the target component; and a second passage-switching unit 13 for switching between the state of forming a passage through which an analysis mobile phase is fed to the analysis column 42 and a passage through which the eluant from the concentration column 32 is fed to the first storage unit 14, and the state of forming a passage through which the analysis mobile phase is fed to the analysis column 42 via the first storage unit 14.

## Description

### TECHNICAL FIELD

The present invention relates to a liquid chromatograph including a concentration-extraction column for pretreatment of a target component contained in a sample liquid, such as concentration, and an analysis column for separation of the target component from other components.

### BACKGROUND ART

For a liquid sample which contains various unnecessary components in addition to target components to be analyzed, a high-performance liquid chromatograph (HPLC) and a liquid chromatograph mass spectrometer (LC/MS) which employs a mass spectrometer as a detector for the HPLC have been widely used in order to separate those various components from each other and perform qualitative and quantitative analysis on the desired target component. It is naturally important for such analytical devices to appropriately set conditions for the separation in an analysis column in order to improve accuracy and sensitivity in the analysis of target components. It has also been increasingly important to remove components which are interruptive of the analysis of target components or are unnecessary for the analysis, or to concentrate the target components, before introduction of samples into the analysis column. For such purposes, automatic sample pretreatment devices have traditionally been employed.

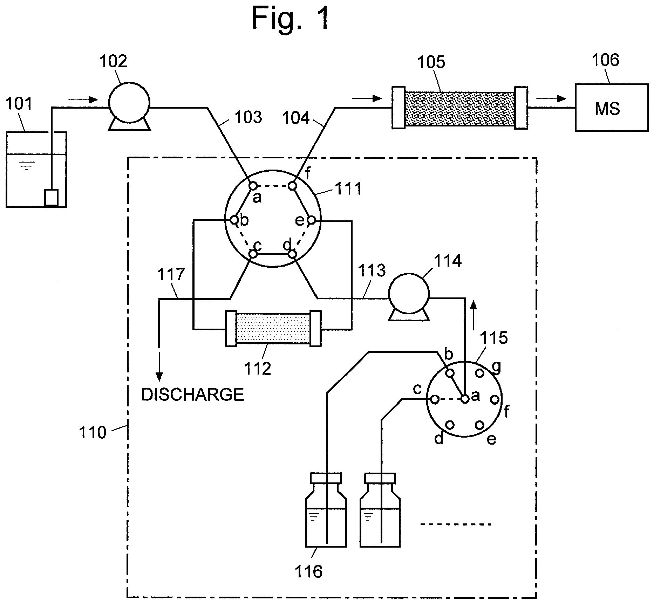

Sample pretreatment devices for liquid chromatographs normally includes a column-switching system which employs a high-pressure passage switching valve and a concentration column for capturing and concentrating target components in a sample (For example, refer to Patent Literatures 1 to 3). Fig. 1 is a schematic view showing an example of the main parts of the LC/MC including a traditional sample pretreatment device.

In the sample pretreatment device 110, a 2-position/6-port high pressure switching valve 111 has port to which a mobile phase supply passage 103 provided with an analysis pump 102 is connected. The analysis pump 102 is operated to draw a mobile phase from a mobile phase container 101 and supply it to the mobile phase supply passage 103. The high pressure switching valve 111 also has port f to which an analysis passage 104 provided with an analysis column 105 and a mass spectrometer (MS) 106 is connected. A 6-position/7-port low pressure switching valve 115 has ports b to g to which passages leading to sample containers 116 filled with samples are individually connected (passages connected to ports d to g are not shown). The 6-position/7-port low pressure switching valve 115 further has a shared port a to which one end of a pretreatment passage 113 provided with an injection pump 114 on its midstream is connected. The other end of the pretreatment passage 113 is connected to port d of the high pressure switching valve 111. The high pressure switching valve 111 has ports b and e between which a concentration column 112 filled with a capture agent is connected, and port c to which a discharge passage 117 leading to a discharge outlet is connected.

In the LC/MC, when a pretreatment of a sample is performed, the injection pump 114 is operated under the condition that the connection in the high pressure switching valve 111 is set as indicated by the broken lines while the connection in the low pressure switching valve 115 is set indicated by the solid line. With this, a liquid sample to be analyzed, e.g., a sample having a biological origin or a sample acquired from soil, flows into the concentration column 112, and target components in the liquid sample are captured by the capture agent in the concentration column 112. The liquid sample is directed to the concentration column 112 for a predetermined period of time so that the target components are sufficiently captured. Then, the high pressure switching valve 111 is switched to another connection state as indicated by the solid lines to connect the concentration column 112 to the analysis passage 104. Then, the analysis pump 102 is operated to supply a mobile phase through the mobile phase supply passage 103 to the concentration column 112. With this, the target components are eluted from the capture agent in the concentration column 112, and carried by the flow of the mobile phase into the analysis column 105. While passing through the analysis column 105, the target components undergo component separation in a temporal direction. The mass spectrometer 106 sequentially detects the mobile phase containing components eluted from the analysis column 105, and produces detection signals each corresponding to the individual components.

### CITATION LIST

### PATENT LITERATURE

Patent Literature 1: JP 2005-31012 A
Patent Literature 2: JP 2007-292620 A
Patent Literature 3: JP 2010-139448 A

### SUMMARY OF INVENTION

### TECHNICAL PROBLEM

A column that contains a capture agent supported by polymers is suitable for the concentration column, since such a column containing polymers has tolerance to solutions in a wide range of pH. This allows various solutions to be used as eluant. For a column containing silicates, which will be described later, the eluant with pH 7 or higher cannot be used, whereas, for example, a column containing polymers allows for the use of an ammonium hydroxide solution or an ammonium carbonate solution, which both have high pH, in order to elute target components having ammonium groups which are contained in a sample acquired from the aforementioned biological-origin sample or soil.

In contrast, a column that contains the stationary phase supported by silicates is suitable for the analysis column, since such a column containing silicates exhibits far superior component separation capability than that of the column containing polymers.

In the liquid chromatograph shown in Fig. 1, a sample undergoes pretreatment in the concentration column 112 in the sample pretreatment device, and is then eluted into the mobile phase so as to be directly introduced into the analysis column 105 and subjected to component separation. In such a construction, if a column containing silicates, which has superior component separation capability, is used as the analysis column 105, a solution having pH 7 or lower should be used as the eluant (doubling as the mobile phase).

If a solution having pH 7 or higher needs to be used as the eluant (doubling as the mobile phase), a column that contains polymers and exhibits inferior component separation capability should be used as the analysis column 105.

The problem to be solved by the present invention is to provide a liquid chromatograph including a concentration column for capturing a target component in a sample and performing concentration or other pretreatments and an analysis column for separating a target component from other components, the liquid chromatograph capable of using a suitable column, eluant and mobile phase for each of the operations of pretreating and separating a target component.

### SOLUTION TO PROBLEM

A liquid chromatograph according to the present invention developed for solving the previously described problems includes:
a) a concentration column for capturing a target component in a liquid sample;
b) an analysis column for separating the target component from other components;
c) a first passage-switching unit configured to switch between the state of forming a passage through which a sample-introduction mobile phase containing the liquid sample is fed to the concentration column, and the state of forming a passage through which an eluant for eluting the target component captured in the concentration column is fed to the concentration column;
d) a first storage unit configured to store the eluant containing the target component; and
e) a second passage-switching unit configured to switch between a state of forming a passage through which an analysis mobile phase is fed to the analysis column and a passage through which the eluant from the concentration column is fed to the first storage unit, and a state of forming a passage through which the analysis mobile phase is fed to the analysis column via the first storage unit.

In the liquid chromatograph according to the present invention, target components are subjected to pretreatment and component separation in the way below.

First, a sample-introduction mobile phase that contains a liquid sample is fed to the concentration column so that the target components are captured inside the concentration column. The first passage-switching unit is used to feed an eluant into the concentration column so that the target components are eluted. The eluant containing the target components is then stored in the first storage unit. During this operation, an analysis mobile phase is fed to the analysis column. The second passage-switching unit is subsequently operated to switch states, thereby allowing the eluant which contains the target components and is stored in the first storage unit to be carried into the analysis column by the flow of the analysis mobile phase.

The liquid chromatograph according to the present invention includes two independently formed passages, i.e. a passage through which the eluant is fed to the concentration column by the operation of the first passage-switching unit, and a passage through which the analysis mobile phase is fed to the analysis column by the operation of the second passage-switching unit. The liquid chromatograph further includes the first storage unit for temporarily storing the eluant containing target components. This configuration allows solutions different from each other to be individually fed to these passages. The analysis mobile phase is never fed to the concentration column, whereas a large amount of eluant is never introduced into the analysis column. Therefore, the concentration column and the eluant suitable for the pretreatment of the target components as well as the analysis column and the mobile phase suitable for the analysis of the target components can be used.

The liquid chromatograph according to the present invention may further include:
f) a second storage unit for storing the eluant; and
g) a third passage-switching unit configured to switch between a state of forming a passage through which the eluant is fed to the second storage unit, and a state of forming a passage through which the sample-introduction mobile phase is fed to the second storage unit to wash out the eluant stored in the second storage unit to the concentration column.

In the mode of the liquid chromatograph which includes the second storage unit and the third passage-switching unit, the minimum amount of eluant necessary for eluting the target components is first stored in the second storage unit. Then, the sample-introduction mobile phase containing the liquid sample is fed to the concentration column. Inside the concentration column, the target components are captured. Subsequently, the second passage-switching unit is operated to switch passages to wash out, by the sample-introduction mobile phase which does not contain the liquid sample, the eluant stored in the second storage unit to the concentration column so as to elute the target components store them in the first storage unit. In this mode of the liquid chromatograph, the target components are eluted into the minimum amount of eluant, thereby enabling an analysis of the eluant containing target components at high concentration.

### ADVANTAGEOUS EFFECTS OF THE INVENTION

By using the liquid chromatograph according to the present invention it becomes possible to employ a concentration column and eluant as well as an analysis column and a mobile phase, respectively suitable for pretreatment and analysis of target components.

### BRIEF DESCRIPTION OF DRAWINGS

Fig. 1 is a diagram showing a passage configuration in a conventional liquid chromatograph.
Fig. 2 is a diagram showing a passage configuration in a liquid chromatograph according to an embodiment of the present invention.
Fig. 3 is a diagram illustrating passages used in an eluant storing step in the liquid chromatograph according to the embodiment.
Fig. 4 is a diagram illustrating passages used in a sample injection step in the liquid chromatograph according to the embodiment.
Fig. 5 is a diagram illustrating passages used in a target-component elution step in the liquid chromatograph according to the embodiment.
Fig. 6 is a diagram illustrating passages used in an analysis step in the liquid chromatograph according to the embodiment.

### DESCRIPTION OF EMBODIMENTS

An embodiment of a liquid chromatograph according to the present invention is described hereinafter, with reference to the drawings. The liquid chromatograph according to the present embodiment is used to perform pretreatment, such as the concentration and cleanup, of target components contained in a liquid sample, and then to separate the target components from other components, so as to analyze the target components.

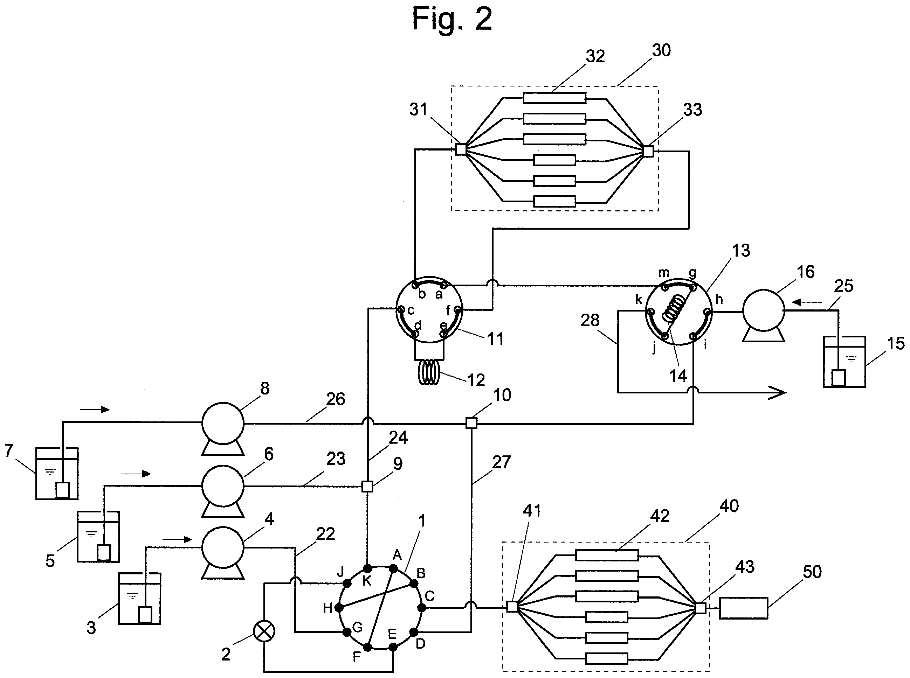

Fig. 2 is a diagram showing a passage configuration in the liquid chromatograph according to the present embodiment. The passages in the liquid chromatograph according to the present embodiment includes three passage switching valves, which are a ten-way valve 1, a first six-way valve 11, and a second six-way valve 13. The ten-way valve 1 serves as a first passage-switching unit of the present invention in conjunction with pumps 4 and 6 which are described later. The first six-way valve 11 and the second six-way valve 13 respectively serve as a third passage-switching unit and a second passage-switching unit of the present invention. The first six-way valve 11 used for the introduction and pretreatment of a sample is a low pressure valve, whereas the second six-way valve 13 used for feeding an analysis mobile phase is a high-pressure valve.

The ten-way valve 1 includes passages each of which permanently connects port A to port F, and port B to port H. In addition, the ten-way valve 1 includes ports C, E, J, D, G, and K. Port C is connected to an analysis column unit 40, port E to port J via a sample injection unit 2, port D to an analysis mobile-phase supply passage 27, port G to a pretreatment aqueous-solvent supply passage 22, and port K to a pretreatment solvent supply passage 24, respectively.

The first 6-port valve 11 includes ports a, b, f, and c. Port a connects to port m of the second 6-port valve 13, port b to port f via a concentration column unit 30, and port c to the pretreatment solvent supply passage 24. In addition, the first 6-port valve 11 further includes ports d and e which are connected through a passage provided with a second storage unit 12 having 50µl capacity.

The second six-way valve 13 includes ports g, j, h, i, and k. Ports g and j are connected through a passage on which a first storage unit 14 having 100µl capacity is disposed. Port h is connected to an analysis aqueous-solvent supply passage 25, port i to the analysis mobile-phase supply passage 27, and port k to a disposal passage 28, respectively.

The pretreatment aqueous-solvent supply passage 22 is provided with a container 3 storing a pretreatment aqueous solvent and a pump 4 for feeding the aqueous solvent stored in the container 3 to port G of the ten-way valve 1.

A pretreatment organic-solvent supply passage 23 is provided with a container 5 storing a pretreatment organic-solvent and a pump 6 for feeding the organic solvent stored in the container 5 to a pretreatment mixer 9 disposed on the pretreatment solvent supply passage 24.

The analysis aqueous-solvent supply passage 25 is provided with a container 15 storing an analysis aqueous solvent and a pump 16 for feeding the aqueous solvent stored in the container 15 to port h of the second six-way valve 13.

An analysis organic-solvent supply passage 26 is provided with a container 7 storing an analysis organic solvent and a pump 8 for feeding the organic solvent stored in the container 7 to an analysis mixer 10 disposed on the analysis mobile-phase supply passage 27.

The concentration column unit 30 includes six concentration columns 32 arranged in parallel, and two passage switching units 31 and 33 for switching passages which are individually connected to the six concentration columns 32. The six concentration columns 32 individually contain capture agents carried on polymers, each column having a different diameter, length, and type of capture agent.

Similar to the above, the analysis column unit 40 includes six analysis columns 42 arranged in parallel, and two passage switching units 41 and 43 for switching passages individually connected to the six analysis columns 42. The six analysis columns 42 individually contain solid phases carried on silicates, each column having a different diameter, length and type of the solid phase.

The analysis column unit 40 is adjacent to, in its discharge side, a detector 50 which sequentially detects components (and the analysis mobile phase) separated in the analysis columns 42.

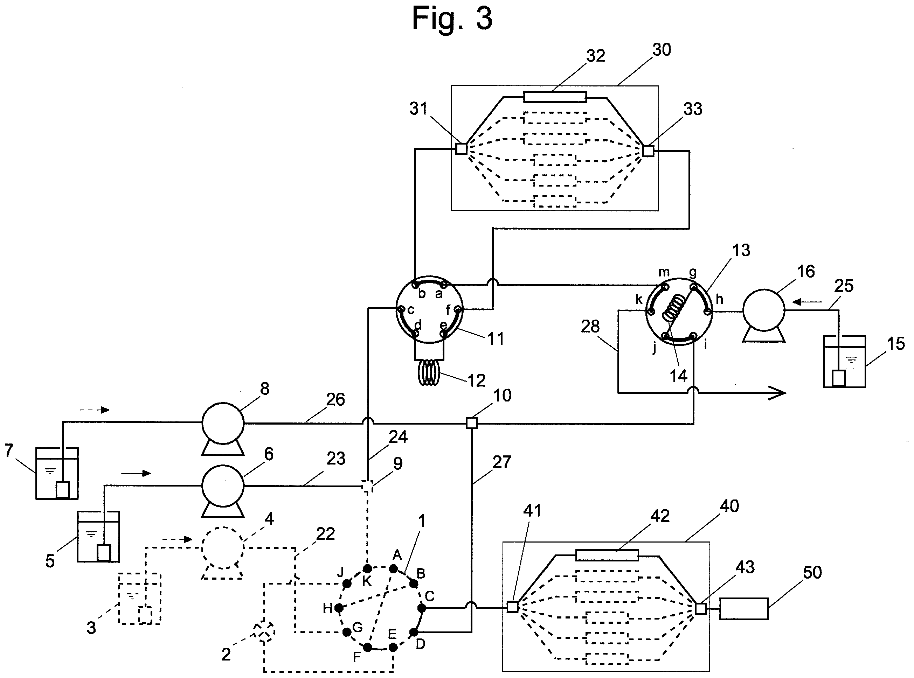

Operations for the pretreatment and the analysis on samples using the liquid chromatograph according to the present embodiment are described hereinafter, with reference to Figs. 3 to 6. In these drawings that refer to the respective steps, the passages through which solvents flow are shown by solid lines. In the present embodiment, a pretreatment aqueous solvent is used for the sample-introduction mobile phase, a pretreatment organic solvent is used for the eluant, and a mixture of the pretreatment aqueous solvent with the pretreatment organic solvent is used for the cleanup liquid. In addition, a mixture of the analysis aqueous solvent with the analysis organic solvent is used for the analysis mobile phase.

### [Eluant Storing Step]

In the eluant storing step, an eluant is stored in the second storage unit 12 through passages shown by solid lines in Fig. 3.

The eluant storing step specifically proceeds as follows. Pump 6 is operated to feed the pretreatment organic solvent to port c of the first six-way valve 11 through the pretreatment organic-solvent supply passage 23 and the pretreatment solvent supply passage 24. Thus, the pretreatment organic solvent (eluant) in an amount of 50µl is stored in the second storage unit 12 disposed between port d and port e.

In parallel, pump 16 is operated to feed the analysis aqueous solvent to the analysis mixer 10 through the analysis aqueous-solvent supply passage 25 and the second six-way valve 13. In the second six-way valve 13, the analysis aqueous solvent flows through port h, port g, the first storage unit 14, port j, and port i, in that order. Pump 8 is simultaneously operated to feed the analysis organic solvent to the analysis mixer 10. The analysis mixer 10 mixes the analysis aqueous solvent with the analysis organic solvent to prepare an analysis mobile phase. The obtained analysis mobile phase is fed to the analysis columns 42 in the analysis column unit 40 through the analysis mobile-phase supply passage 27 and ports D and C of the ten-way valve 1. It should be noted that the analysis mobile phase is fed to the analysis columns 42 through this route, up to a cleanup step, which will be described later.

### [Sample Injection Step]

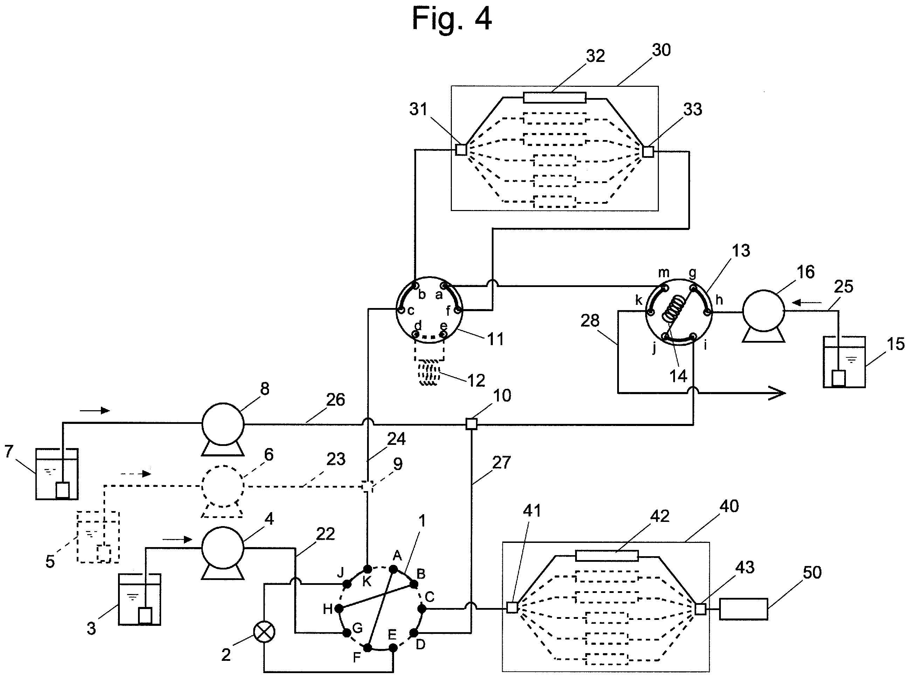

In the eluant storing step, target components in the liquid sample are captured in the concentration columns 32 using passages shown by solid lines in Fig. 4.

First, passages in the first six-way valve 11 are switched. Then, pump 4 is operated to feed the pretreatment aqueous solvent (sample-introduction mobile phase) to port G in the ten-way valve 1 through the pretreatment aqueous-solvent supply passage 22. In parallel, a liquid sample is injected from the sample injection unit 2 to the sample-introduction mobile phase. Then, the liquid sample being carried by the flow of the sample-introduction mobile phase flows through the pretreatment solvent supply passage 24, and ports c and b of the first six-way valve 11, to be introduced in the concentration columns 32. The target components contained in the liquid sample are thus captured in the concentration columns 32.

### [Cleanup Step]

In the cleanup step, the target components captured in the concentration columns 32 are cleaned using the pretreatment organic-solvent supply passage 23 in addition to the passages shown by the solid lines in Fig. 4.

In this step, the sample injection unit 2 is stopped, and pump 6 is operated to feed the pretreatment organic solvent to the pretreatment mixer 9. In the pretreatment mixer 9, the pretreatment aqueous solvent and the pretreatment organic solvent are mixed. The obtained mixture liquid (cleanup solvent) is fed to the concentration columns 32 through the same form of passages as the aforementioned ones. The cleanup solvent is used to remove unnecessary components other than the target components captured inside the concentration columns 32. A cleanup liquid containing the unnecessary components is discharged to the disposal passage through the first six-way valve 11 and the second six-way valve 13.

### [Target Component Elution Step]

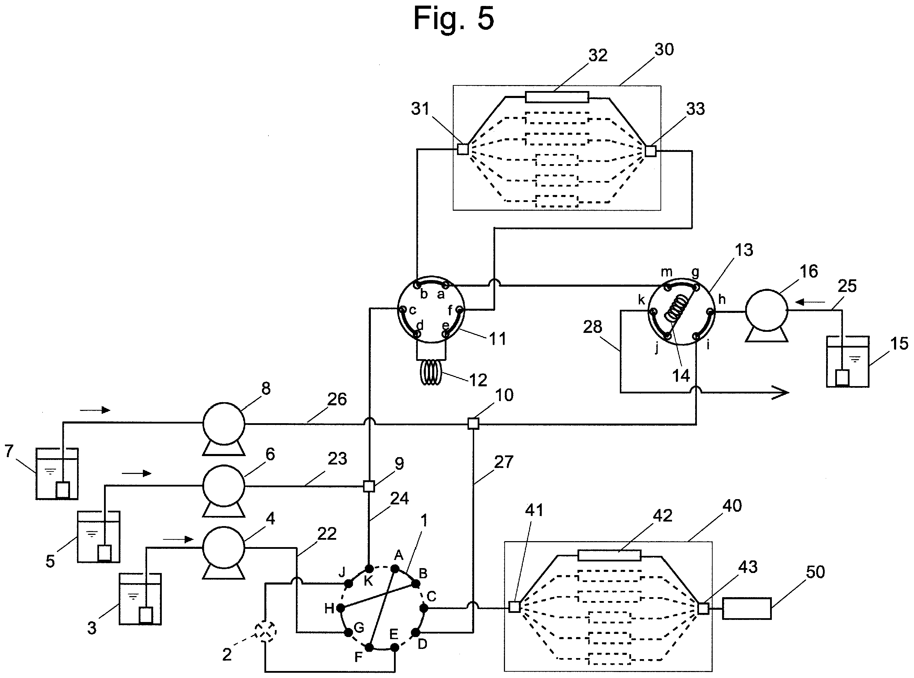

In the target component elution step, the target components captured in the concentration columns 32 are eluted using the passages shown by the solid lines in Fig. 5, and are stored in the first storage unit 14.

In this step, the passages in both of the first and six-way valves 11 and 13 are switched. After the switching, the passages in the first six-way valve 11 allows the mixture liquid of the pretreatment aqueous solvent with the pretreatment organic solvent to be fed to the second storage unit 12. The 50µl of the pretreatment organic solvent (eluant) stored in the second storage unit 12 is washed out by the mixture liquid so as to be introduced into the concentration columns 32. The target components captured in the concentration columns 32 are eluted in the eluant, and fed through ports b and a in the first six-way valve 11, and then through ports m and g in the second six-way valve 13, to the first storage unit 14. The analysis aqueous solvent introduced in the first storage unit 14 in the previous step is thus washed out by the eluant containing the target components so as to be discharged to the disposal passage 28.

In the target component elution step, the analysis aqueous solvent fed through the analysis aqueous-solvent supply passage 25 is fed to the analysis mixer 10 through port h and port i of the second six-way valve 13. In the analysis mixer 10, the analysis aqueous solvent is mixed with the analysis organic solvent, and fed to the analysis columns 42. Thus, the analysis mobile phase is fed to the analysis columns 42 through passages different from those used in the previous steps up to the cleanup step.

### [Analysis Step]

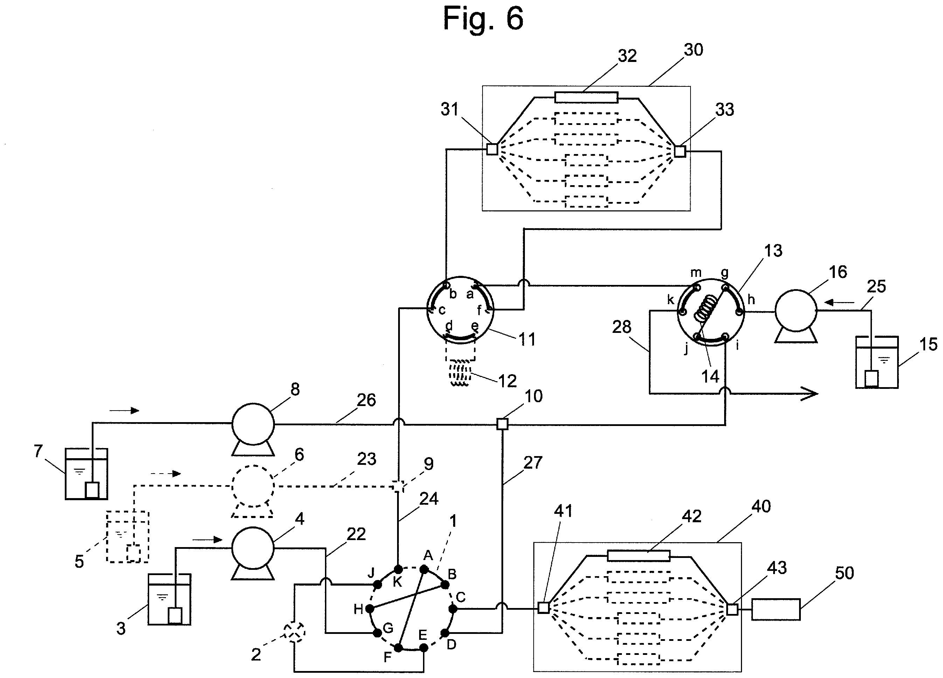

In the analysis step, the eluant containing the target components which is stored in the first storage unit 14, is introduced into the analysis columns 42 using the passages shown by the solid lines in Fig. 6.

In this step, the passages in the second six-way valve 13 are switched so that the analysis aqueous solvent supplied through the analysis aqueous-solvent supply passage 25 is fed to the first storage unit 14. The eluant containing the target components which is stored in the first storage unit 14 is thus washed out by this aqueous solvent so as to be fed to the analysis mixer 10. Meanwhile, in the analysis mixer 10, the analysis aqueous solvent and the analysis organic solvent are mixed. Accordingly, the target components are carried through port D and port C of the ten-way valve 1 by the flow of the analysis mobile phase, to be introduced into the analysis columns 42. In the analysis columns 42, the target components undergo component separation, and are then detected by the detector 50.

During the separation and detection of the target components, the passages in the first six-way valve 11 are switched, and the pump 4 is operated to feed the pretreatment aqueous solvent (sample-introduction mobile phase) to the concentration columns 32, to thereby replace the solvent in the passages with the pretreatment aqueous solvent. The next analysis is thus prepared.

As described thus far, the liquid chromatograph according to the present embodiment includes passages for feeding an eluant (pretreatment organic solvent) to the concentration columns 32, and passages for feeding an analysis mobile phase to the analysis columns 42, separately. This prevents the analysis mobile phase from being fed to the concentration columns 32 under high pressure, and a large amount of eluant from being fed to the analysis columns 42. In addition, the eluant containing the target components eluted from the concentration columns 32 is temporarily stored in the first string unit 14. Accordingly, it is possible to use one column suited for the pretreatment of the target components, such as the concentration and cleanup, and another separate column suited for the separation and analysis of the target components. In addition, optimal eluant can be used for each of those purposes.

In the liquid chromatograph according to the above embodiment, target components can also be introduced into the analysis columns 42 without pretreatment (i.e., without capturing target components inside the concentration columns 32). Details are as follows. Passages are switched in the ten-way valve 1, and a liquid sample is injected from the sample injection unit 2. With this, the liquid sample can be carried into the analysis columns 42 by the flow of the analysis mobile phase fed from the analysis mixer 10. Thus, the liquid chromatograph according to the present embodiment can provide passages suitable for both analyses with and without pretreatment of target components, such as the concentration and cleanup.

The aforementioned embodiment is a mere example of the present invention, and can be appropriately modified in accordance with the purposes of the present invention.

In the aforementioned embodiment, a pretreatment aqueous solvent is used for the sample-introduction mobile phase, a pretreatment organic solvent is used for the eluant, a mixture of those two liquids is used for the cleanup liquid, and a mixture of an analysis aqueous solvent with an analysis organic solvent is used for the analysis mobile phase. These can be appropriately modified according to target components.

Furthermore, in the aforementioned embodiment, the pretreatment mixer 9 is disposed between port K of the ten-way valve 1 and port c of the first six-way valve 11, whereas the analysis mixer 10 is disposed between port i of the second six-way valve 13 and the ten-way valve D. These mixers can be, however, disposed at any other location where the desired mixture liquid can be prepared. In view of accurate control on the mixture ratio of the solvents, the mixers may be disposed at positions as close as possible to the respective target columns, as in the present embodiment.

Furthermore, though the capacity of the first storage unit 14 is set to 100µl, and that of the second storage unit 12 is set to 50µl in the present embodiment, these capacities may be modified according to the volume of target components, or other factors. In order to ensure that an eluant in which the target components are eluted is supplied to the analysis, the capacity of the first storage unit 14 may preferably be greater than that of the second storage unit 12. For example, the former capacity may be twice as large as the latter, as in the present embodiment.

### REFERENCE SIGNS LIST

- 1: Ten-Way Valve
- 2: Sample Injection Unit
- 9: Pretreatment Mixer
- 10: Analysis Mixer
- 11, 13: Six-Way Valve
- 12: Second Storage Unit
- 14: First Storage Unit
- 22: Pretreatment Aqueous-Solvent Supply Passage
- 23: Pretreatment Organic-Solvent Supply Passage
- 24: Pretreatment Solvent Supply Passage
- 25: Analysis Aqueous-Solvent Supply Passage
- 26: Analysis Organic-Solvent Supply Passage
- 27: Analysis Mobile-Phase Supply Passage
- 28: Disposal Passage
- 30: Concentration Column Unit
- 31: Passage Switching Valve
- 32: Concentration Column
- 40: Analysis Column Unit
- 41: Passage Switching Valve
- 42: Analysis Column
- 50: Detector

## Claims

1. A liquid chromatograph comprising:
a) a concentration column for capturing a target component in a liquid sample;
b) an analysis column for separating the target component from other components;
c) a first passage-switching unit configured to switch between a state of forming a passage through which a sample-introduction mobile phase containing the liquid sample is fed to the concentration column, and a state of forming a passage through which an eluant for eluting the target component captured in the concentration column is fed to the concentration column;
d) a first storage unit configured to store the eluant containing the target component; and
e) a second passage-switching unit configured to switch between a state of forming a passage through which an analysis mobile phase is fed to the analysis column and a passage through which the eluant from the concentration column is fed to the first storage unit, and a state of forming a passage through which the analysis mobile phase is fed to the analysis column via the first storage unit.

2. The liquid chromatograph according to claim 1, further comprising:
f) a second storage unit for storing the eluant; and
g) a third passage-switching unit configured to switch between a state of forming a passage through which the eluant is fed to the second storage unit, and a state of forming a passage through which the sample-introduction mobile phase is fed to the second storage unit to wash out the eluant stored in the second storage unit to the concentration column.

3. The liquid chromatograph according to claim 2, wherein
the first storage unit has a capacity greater than a capacity of the second storage unit.

4. The liquid chromatograph according to one of claims 1 to 3, wherein
the analysis mobile phase containing the liquid sample is introducible into the analysis column without passing through the concentration column.
